# EUROPÄISCHE PATENTSCHRIFT

(11) **EP 1 735 187 B1**
(45) Veröffentlichungstag und Bekanntmachung des Hinweises auf die Patenterteilung: **12.08.2009**
(21) Anmeldenummer: 05701442.5
(22) Anmeldetag: 05.01.2005
(51) Int. Cl.: B60Q 1/52, G08G 1/16

(54) **ANTI-KOLLISIONSSYSTEM FÜR EIN FAHRZEUG SOWIE HIERAUF BEZOGENES VERFAHREN**
ANTICOLLISION SYSTEM FOR A VEHICLE AND METHOD SPECIFIC THERETO
SYSTEME ANTICOLLISION POUR VEHICULE ET PROCEDE SPECIFIQUE DUDIT SYSTEME

(30) Priorität: 24.02.2004 DE 102004008894
(43) Veröffentlichungstag der Anmeldung: 27.12.2006
(73) Patentinhaber: ROBERT BOSCH GMBH, 70442 Stuttgart (DE)
(72) Erfinder: EWERHART, Frank, 74189 Weinsberg (DE); WERNER, Uwe, 60433 Frankfurt (DE); FREIENSTEIN, Heiko, 31141 Hildesheim (DE); TILP, Jan, 70806 Kornwestheim (DE); SELINGER, Joachim, 70597 Stuttgart (DE); CARSTENS-BEHRENS, Soenke, 70839 Gerlingen (DE); HAGEMANN, Markus, 70839 Gerlingen (DE)
(86) Internationale Anmeldenummer: PCT/EP2005/050029
(87) Internationale Veröffentlichungsnummer: WO 2005/080133

(56) Entgegenhaltungen:
- EP-A- 0 738 647
- DE-A1- 19 831 071
- DE-A1- 19 852 375

## Beschreibung

### Technisches Gebiet

Die vorliegende Erfindung betrifft ein Sicherheitssystem, insbesondere Unfallvermeidungssystem, gemäß dem Oberbegriff des Anspruchs 1 sowie ein Verfahren zum Betreiben eines derartigen Sicherheitssystems.

### Stand der Technik

Die aktive Sicherheit ist einer der Schwerpunkte in der Entwicklung aktueller und auch zukünftiger Fahrzeugsysteme. Bekannte Systeme im Bereich der aktiven Sicherheit, das heißt zur Unfallvermeidung sind beispielsweise das elektronische Stabilitätsprogramm (sogenanntes E[lectronic]S[tability]P[rogramme]) zur Fahrzeugstabilisierung durch Bremseingriff im fahrdynamischen Grenzbereich sowie V[ehicle]D[ynamic]M[anagement] als Erweiterung des ESP durch zusätzliche Lenkeingriffe.

Neben Systemen zur Fahrzeugstabilisierung sind auch Systeme zur Auslösung einer Notbremsung bekannt, die bei Erkennung einer Kollisionsgefahr, zum Beispiel auf Basis einer Umfelderfassung mit Radar- und/oder Videosensoren, automatiseb eingreifen.

Ferner ist eine Vielzahl von Parkhilfen bekannt, die auf unterschiedlichste Weise einem Fahrer beim Einparken helfen. So ist aus der Druckschrift DE 198 09 416 A1 eine Einparkhilfe bekannt, die eine Einparkstrategie in Abhängigkeit der Größe der potentiellen Parklücke berechnet und diese Einparkstrategie dem Fahrer des Kraftfahrzeugs mitteilt, jedoch dem Fahrer die Entscheidung überlässt, oh er der Einparkstrategie folgen will.

Ferner haben durchschnittliche Autofahrer in Gefahrensituationen oft Probleme, durch geeignete Lenkmanöver einem Hindernis auszuweichen. So zeigt sich zum Beispiel in Fahrsicherheitstrainings, dass zu spät, zu schnell bzw. zu langsam, zu viel bzw. zu wenig oder gar nicht gelenkt wird und außerdem das Gegenlenken, zum Beispiel bei doppeltem Spurwechsel, falsch oder gar nicht ausgeführt wird. Dies führt entweder zu einer Kollision mit einem Hindernis oder zu einer Instabilität, zum Beispiel zum Schlendern des Fahrzeugs.

In der Druckschrift EP 0 970 875 A2 wird ein System vorgeschlagen, das durch Lenkaktorik verhindern soll, dass der Fahrer einen zur Kollision führenden Lenkwinkel einstellt, oder das gegebenenfalls autorostisch einen Ausweichkurs einstellt. Bei diesem System wird die Entscheidung, ob, wann und in welche Richtung ausgewichen wird, durch das technische System getroffen und somit dem Fahrer abgenommen. Eine technische Realisierung dieser Ausweichentscheidung erfordert jedoch hohen sensorischen Aufwand und wirft auch juristische, zum Beispiel haftungsrechtliche Fragen auf.

Die DE 198 31071 A1 zeigt eine Lösung, nach der aufgrund von Abstandssensoren des eigenen Fahrzeugs ein Kollisionslenkwinkel mit einem Hindernis ermittelt wird. Eine Steueranordnung greift in das Lenksystem des Fahrzeugs derart ein, dass der Fahrer gehindert ist, einen Lenkwinkel einzustellen, der dem Kollisionslenkwinkel entspricht, d. h. der zu einer Kollision mit dem Hindernis führt. Auf diese Weise soll die Kollision mit dem Hindernis wirksam vermieden werden. Ferner wird erwähnt, dass das System ein Ausweichmanöver selbständig durchführen kann, oder mittels akustischen Signalen ein Lenkmanöver empfehlen kann.

Aus der DE 198 52 375 ist ein ein Bremssystem für ein Fahrzeug mit einer über ein Bremspedal sowie über Fremdkraft betätigbaren Bremsanlage und einer Abstandserfassungseinrichtung bekannt, welche den Abstand zu einem vorausfahrenden Fahrzeug erfaßt. Ein Auffahren auf ein vorausfahrendes Fahrzeug durch Unterschätzen der eigenen Annäherung an dieses Fahrzeug wird verhindert, indem eine Steuereinrichtung vorgesehen ist, die bei einer Betätigung des Bremspedals prüft, ob die dadurch hervorgerufene Verzögerung ausreicht, um eine Kollision mit dem vorausfahrenden Fahrzeug zu verhindern und - falls dies nicht der Fall ist - die fremdkraftgesteuerte Bremsanlage derart beaufschlagt, daß eine Kollision vermieden wird.

Aus der EP 0738 647 A2 ist die Möglichkeit einer Kollisionsverhinderung beschrieben, bei der durch Aufbau von zusätzlichen lenkmomenten beschrieben, wobei jedoch keine Vorgabe einer ausgewählten Fahrtrajektorie bei der nach Einleiten eines Ausweichfahrmanövers durch den Fahrer durch einen entsprechenden Lenkeinschlag des Fortbewegungsmittels vorgesehen wird, wobei zusätzlich die Vorgabe vom Fahrer jederzeit übersteuert werden kann.

### Darstellung der Erfindung: Aufgabe, Lösung, Vorteile

Ausgehend von den vorstehend dargelegten Nachteilen und Unzulänglichkeiten sowie unter Würdigung des umrissenen Standes der Technik liegt der vorliegenden Erfindung die Aufgabe zugrunde, ein Sicherheitssystem der eingangs genannten Art sowie ein Verfahren der eingangs genannten Art so weiterzuentwickeln, dass sowohl vorrichtungsmäßig als auch verfahrensmäßig ein vom Führer des Fortbewegungsmittels eingeleitetes Ausweichmanöver fortgebildet wird.

Diese Aufgabe wird durch ein Sicherheitssystem mit den im Anspruch 1 bzw. im Anspruch 4 angegebenen Merkmalen sowie durch ein Verfahren mit den im Anspruch 5 bzw. im Anspruch 9 angegebenen Merkmalen gelöst. Vorteilhafte Ausgestaltungen und zweckmäßige Weiterbildungen der vorliegenden Erfindung sind in den jeweiligen Unteransprüchen gekennzeichnet.

Beim Sicherheitssystem gemäß der vorliegenden Erfindung bzw. beim Verfahren gemäß der vorliegenden Erfindung ermittelt die Auswerturgseinheit aus den von der Erfassungseinheit in Form von Daten und Informationen erfassten Bedingungen mindestens eine Fahrvariante, insbesondere mindestens eine Ausweichtrajektorie.

Wenn nun der Führer des Fortbewegungsmittels ein entsprechendes Fahrmanöver, insbesondere ein Ausweichmanöver einleitet oder eingeleitet hat, dann erfolgt die Funktion des Sicherheitssystems, insbesondere der Auswertungseinheit, bzw. des Verfahrens dahingehend, dass dieses Fahrmanöver in optimierter Form, insbesondere in Form einer optimale Ausweichtrajektoric vorgegeben, unterstützt und/oder vorgeschlagen wird. Dieses System bringt in Gefahrensituationen eine deutliche Erhöhung der Fahrzeugsicherheit.

Bei einer vorteilhaften Ausführungsform der vorliegenden Erfindung schlägt das Lenksystem dem Führer des Fortbewegungsmittels in einer Not-Ausweichsituation die optimale Ausweichtrajcktorie, zum Beispiel in Form eines aufgebrachten oder beaufschlagten Lenkmoments und/oder durch eine geeignete haptische Lenkunterstützung, vor und ermöglicht so auch ungeübten Fahrern ein sicheres Ausweichen.

Die haptische Lenkunterstützung kann ein haptisches Signal, zum Beispiel in Form mindestens einer Schwingung oder mindestens einer Vibration, senden und beispielsweise dem Fahrer eines Kraftfahrzeugs auf diese Weise die optimale Ausweichtrajektorie vermitteln. Die Erfindung umfasst somit eine Lenkunterstützung, die beispielsweise beim Ausweichen in Notsituationen zum Einsatz kommt.

Vorteilbafterweise erfasst das Sicherheitssystem bzw. das Verfahren eine bevorstehende Kollision sowie die Abmessungen und Entfernungen zum Hindernis mit Hilfe von Umfelderfassungssensoren, zum, Beispiel mittels Radar und/oder mittels Video; diese Sensoren können zumindest vor, gegebenenfalls aber auch neben und/oder hinter dem Fahrzeug angebracht sein.

Zweckmäßigerweise wird zumindest bei bestehender Gefahr einer Kollision mit einem Hindernis von der Auswertungseinheit (= Recheneinheit) sowohl für ein Fahrmanöver, beispielsweise für ein Ausweichen, nach links - als auch für ein Fahrmanöver, beispielsweise für ein Ausweichen, nach rechts jeweils mindestens eine für die aktuelle Situation optimale Ausweichtrajcktorie berechnet und/oder vorgehalten, die eine sichere Vorbeifahrt am Hindernis unter Beachtung der Fahrstabilität ermöglicht.

In erfindungswesentlicher Ausgestaltung wird also die optimale Ausweichtrajektorie in die entsprechende Richtung erst vorgegebcn, wenn der Fahrer durch Betätigung des Lenkrads ein Ausweichmanöver, sei es nach links oder nach rechts, einleitet oder eingeleitet bat Die Vorgabe kann
- haptisch, zum Beispiel über ein aufgebrachtes Lenkmoments, erfolgen und/oder
- vom Fahrer jederzeit übersteuert werden.

Vorteil dieser Strategie ist, dass die äußerst komplexe Entscheidung, ob, wann und in welche Richtung ausgewichen wird, durch den Fahrer getroffen wird, so dass juristische, insbesondere haftungsrechtliche Probleme in zuverlässiger Weise vermieden werden.

Bei einer vorteilhaften Ausführungsform der vorliegenden Erfindung sendet die Auswertungseinheit bei Gefahr, insbesondere bei hoher Kollisionsgefahr, mindestens cin akustisches, haptisches und/oder optisches Warnsignal und/oder leitet eine A[utomatische]N[ot]B[remsung] ein, sofern keine anderweitige Fahrvariante, insbesondere keine Ausweichtrajektorie, zur Verfügung steht.

Vorteilhafterweise parametrisiert, vorbereitet und/oder aktiviert das Sicherheitssystem gemäß der vorstehend dargelegten Art, insbesondere die Auswertungseinheit gemäß der vorstehend dargelegten Art, und/oder das Verfahren gemäß der vorstehend dargelegten Art bei Gefahr, insbesondere bei hoher Kollisionsgefahr, das Lenksystem und/oder das Fahrwerk des Fortbewegungsmittels und/oder das Bremssystem, so dass das Fahrverhalten des Fortbewegungsmittels für ein durch den Führer des Fortbewegungsmittels durchzuführendes Fahrmanöver, insbesondere Ausweichmanöver oder Notbremsmanöver, optimiert ist.

Alternativ hierzu kann die vorliegende Erfindung ein Siclierheitssystem gemäß der eingangs genannten Art, insbesondere eine Auswertungseinheit gemäß der eingangs genannten Art, sowie ein Verfahren gemäß der eingangs genannten Art betreffen, bei dem bei Gefahr, insbesondere bei hoher Kollisionsgefahr, das Lenksystem und das Fahrwerk des Fortbewegungsmittels und/oder das Bremssystem parametrisiert, vorbereitet und/oder aktiviert wird, so dass das Fahrverhalten des Fortbewegungsmittels für ein durch den Führer des Fortbewegungsmittels durchzuführendes Fahrmanöver, insbesondere Ausweichmanöver, optimiert ist.

Die vorliegende Erfindung betrifft schließlich die Verwendung mindestens eines Sicherheitssystems gemäß der vorstehend dargelegten. Art und/oder eines. Verfahrens gemäß der vorstehend dargelegten Art in mindestens einem Fahrerassistenzsystem zum Erhöhten der Sicherheit, insbesondere zum Vermeiden von Unfällen, im Straßenverkehr.

### Kurze Beschreibung der Zeichnungen

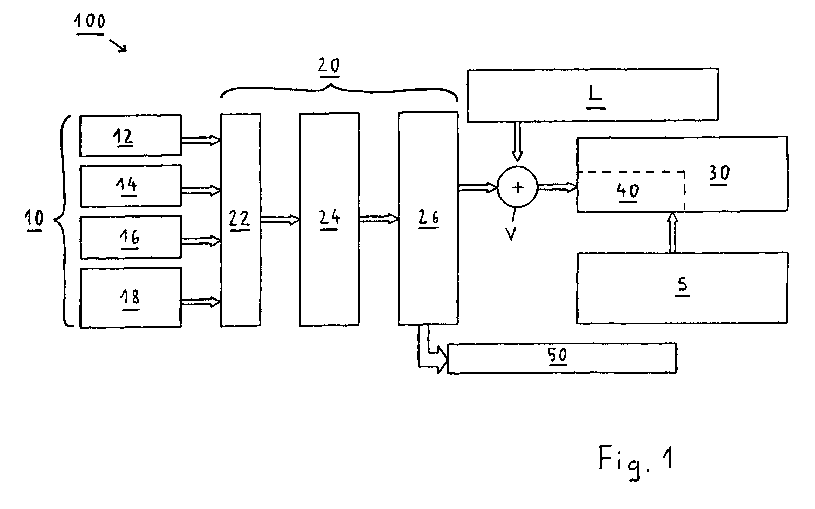

Wie bereits vorstehend erörtert, gibt es verschiedene Möglichkeiten, die Lehre der vorliegenden Erfindung in vorteilhafter Weise auszugestalten und weiterzubilden. Hierzu wird einerseits auf die den Ansprüchen 1 und 5 nachgeordneten Ansprüche verwiesen, andererseits werden weitere Ausgestaltungen, Merkmale und Vorteile der vorliegenden Erfindung nachstehend anhand der durch die Figuren 1 bis 3 veranschaulichten drei Ausführungsbeispiele näher erläutert.

Es zeigt:
Fig. 1 in schematischer Darstellung ein erstes Ausführungsbeispiel für ein Sicherheitssystem gemäß der vorliegenden Erfindung, das nach dem Verfahren gemäß der vorliegenden Erfindung arbeitet;
Fig. 2 in schematischer Darstellung ein zweites Ausführungsbeispiel für ein Sicherheitssystem gemäß der vorliegenden Erfindung, das nach dem Verfahren gemäß der vorliegenden Erfindung arbeitet; und
Fig. 3 in schematischer Darstellung ein drittes Ausführungsbeispiel für ein Sicherheitssystem gemäß der vorliegenden Erfindung, das nach dem Verfahren gemäß der vorliegenden Erfindung arbeitet.

Gleiche oder ähnliche Ausgestaltungen, Elemente oder Merkmale sind in den Figuren 1 bis 3 mit identischen Bezugszeichen versehen.

### Bester Weg zur Ausführung der Erfindung

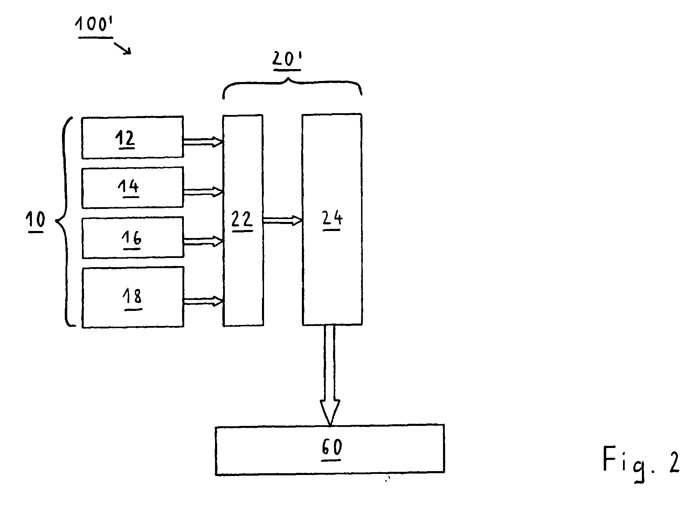

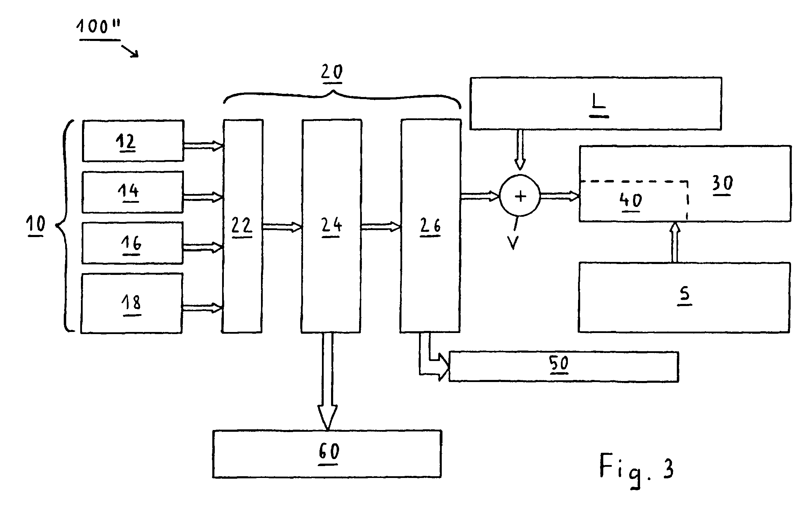

Zur Vermeidung überflüssiger Wiederholungen beziehen sich die nachfolgenden Erläuterungen hinsichtlich der Ausgestaltungen, Merkmale und Vorteile der vorliegenden Erfindung (soweit nicht anderweitig angegeben) sowohl auf das in Figur 1 dargestellte erste Ausführungsbeispiel eines Sicherheitssystems 100 als auch auf das in Figur 2 dargestellte zweite Ausführungsbeispiel eines Sicherheitssystems 100' als auch auf das in Figur 3 dargestellte dritte Ausführungsbeispiel eines Sicherheitssystems 100".

In den Figuren 1 und 3 ist der jeweilige schematische Arbeitsablauf eines Sicherheitssystems 100 bzw. 100" zur Lenkunterstützung und zur automatischen Notbrems-Unterstützung in einer Notsituation, nämlich beim überraschenden Ausweichen vor einem Hindernis, dargestellt.

In einem ersten Arbeitsschritt werden interne und externe Bedingungen, nämlich die Parameter und das Umfeld eines Kraftfahrzeugs, erfasst. Zur Umsetzung dieser Funktion weist das Sicherheitssystem 100 eine Erfassungseinheit 10 zur Umfelderfassung auf; diese Umfelderfassungseinheit 10 arbeitet unter anderem auf Radarsensorbasis 12 sowie auf Videosensorbasis 14.

Zudem werden im Rahmen dcr Erfassungseinheit 10 mittels weiterer Sensoren 16 zusätzlich Daten und Informationen über die befahrene Straße erfasst, zum Beispiel Daten und Informationen über Anzahl und Breite der Fahrspuren sowie über die Position des eigenen Fahrzeugs und eines potentiellen Kollisionsgegners relativ zu den Fahrspuren. Auch werden Daten und Informationen einer digitalen Karte 18, zum Beispiel eines Navigationssystems, in die Umfelderfassung 10 einbezogen. Als weitere Informtionsquellen sind auch sind auch Fahrzeug-Kommunikation, Fahrzeug-Infrastruktur-Kommunikation und Daten des eigenen Fahrzeuges möglich, letztere sogar notwendig.

Die erfassten Bedingungen werden in Form von Daten und Informationen durch ein Sensordatenfusionsmodul 22 fusioniert und daraufhin von einem Bewertungsmodul 24 hinsichtlich des jeweiligen Gefährdungspotentials bewertet, insbesondere wird die Kollisionsgefahr für das Fortbewegungsmittel bestimmt. Somit werden mit Hilfe der Sensorik 10 Objekte vor, neben und hinter dem Fahrzeug erfasst, mittels des Sensordatenfusionsmoduls 22 zusammengeführt und mit IIilfe des Bewertungsmoduls 24 hinsichtlich einer Kollisionsgefahr für das Fahrzeug bewertet.

Nach der Bestummung der Kollisionsgefahr wird ein Ausweicbalgorithmus erstellt, das heißt mit Hilfe der Daten und Informationen über Hindernis und Straße und Daten über das eigene Fahrzeug werden von einem Berechnungsmodul 26 zyklisch mögliche Fahrvarianten oder Ausweichtrajektorien berechnet, die ein sicheres und stabiles Ausweichen ermöglichen. Dabei wird, zum Beispiel bei Auftreten eines Hindernisses auf der regulären Fahrbahn, sowohl für eine Ausweichvariante nach links als auch für eine Ausweichvariante nach rechts mindestens eine für die aktuelle Situation optimale Ausweichtrajektorie berechnet.

Falls kein Ausweichen mohr möglich ist und somit eine Bestimmung von Ausweichtrajektorien nicht erfolgen kann bzw. keine Ausweichtrajektorie existiert, wird eine A[utomatische]N[ot]B[remsung] ausgelöst (Bezugszeichen 50).

Aus der Darstellung der Figur 1 sowie der Figur 3 ist hierbei ersichtlich, dass das Sensordatenfusionsmodul 22, das Bewertungsmodul 24 und das Berechnungsmodul 26 in einer Auswertungseinheit 20 zusammengefasst sind.

Wird nun in einer Situation mit hoher Kollisionsgefahr ein Fahrmanöver durch den Führer des Fortbewegungsmittels eingeleitet (Bezugszeichen L), das heißt beginnt der Fahrer durch entsprechenden Lenkeinschlag ein (Ausweich-)Lenkmanöver, so wird ihm durch ein geeignetes Lenksystem, zum Beispiel durch ein sogenanntes Stecr-by-wire-System, eine Ausweiehtrajektorie vorgeschlagen (Bezugszeichen 30). Somit wird dem Fahrer bei oder nach Verknüpfen V des Ermittelns 26 der optimalen Ausweichtrajcktorie mit dem Einleiten L des Fahrmanövers die optimale Ausweichtrajektorie vorgeschlagen.

Diese optimale Ausweichtrajcktorie wird dem Fahrer in Form eines aufgebrachten oder beaufschlagten Lenkmoments 40 vermittelt, wobei der Fahrer
- der vorgeschlagenen optimalen Ausweichtrajektorie folgen kann oder
- die vorgeschlagene optimale Ausweichtrajcktorie übersteuern kann (Bezugszeichen S); eine Übersteuerung S der vermittelten optimalen Auswceichtrajcktorie durch den Führer des Forbewegungsmittels ist also jederzeit möglich.

Dabei ist denkbar, dass dem Fahrer die optimale Ausweichtrajektorie und/oder das beaufschlagte Lenkmoment in Form mindestens eines haptischen Signals, beispielsweise in Form mindestens einer Schwingung oder in Form mindestens einer Vibration, vermittelt werden.

Bei hoher Kollisionsgefahr kann der Fahrer optionalerweise beispielsweise durch ein akustisches, haptisches und/oder optisches Warnsignal vor der Kollision gewarnt werden.

Zur Ausweichunterstützung in Notsituationen wird also vom Sicherheitssystem 100 bzw. 100^{a} (vgl. Figur 1 bzw. Figur 3) die Kollisionsgefahr mit Hindernissen vor dem eigenen Fahrzeug erfasst sowie bewertet, und es werden Ausweichtrajektorien berechnet. Leitet der Fahrer ein Ausweichmanöver ein, so kann dem Fahrer eine haptische Lenkunterstützung gegeben werden, die ihm eine optimale Ausweichtrajcktorie vorschlägt.

In Figur 2 ist ein Sicherheitssystem 100' zur Ausweiehunterstützung in Notsituationen dargestellt, das eine von den Figuren 1 und 3 verschiedene Auswertungseinheit 20' aufweist. Die Auswertungseinheit 20' führt Daten und Informationen der Umfelderfassung 10 zusammen (Bezugszeichen 22) und erfasst die Kollisionsgefahr mit IIindernissen vor dem eigenen Fahrzeug (Bezugszeichen 24).

Bei Erkennen einer Kollisionsgefahr (und angesichts eines bevorstehenden Ausweichmanövers durch den Fahrer) wird von der Auswertungseinheit 20' die Lenkaktorik und gegebenenfalls das Bremssystem, insbesondere ein Bremsassistent und/oder ESP, und/oder ein eventuell vorhandenes aktives Fahrwerk so parametrisiert oder vorbereitet (Bezugszeichen 60), dass das Fahrverbalten des Fahrzeugs auf Ausweichmanöver oder Notbremsmanöver optimiert ist, beispielsweise in Bezug auf die Lage des Fahrzeugsehwerpunktes, in Bezug auf die Lenkkennlinie, in Bezug auf die Dämpfung bzw. Federung und/oder in Bezug auf die Wankstabilisierung.

Bei diesem Sicherheitssystem 100' gemäß Figur 2 folgt somit auf die Bestimmung 24 der Kollisionsgefahr die Optimierung 60 der Lenkung und des Fahrwerks für das Ausweichen bzw. das Notbremsmantöver.

Dieses vorgeschlagene System zur Optimierung 60 der Lenkung und des Fahrwerks kann, wie in Figur 2 dargestellt, als eigenständige Variante, das heißt ohne Vorschlag einer Ausweichtrajektorie oder, wie in Figur 3 dargestellt, in Kombination mit der anhand Figur 1 erläuterten haptischen Ausgabe einer Ausweiehtrajektorie aufgebaut werden.

## Patentansprüche

1. Sicherheitssystem (100, 100', 102') für mindestens ein Lenksystem sowie mindestens ein Bremssystem aufweisendes Fortbewegungsmittel, mit mindestens einer Erfassungseinheit (10) zum Erfassen interner und externer Bedingungen, mit einer Auswerteeinheit (20, 20') zum Zusammenführen (22) der von der Erfassungseinheit (10) erfassten Bedingungen in Form von Daten und Informationen und zum Bewerten (24) der erfassten Bedingungen bzw. der Daten und Informationen hinsichtlich des jeweiligen Gefährdungspotentials, wobei die Auswerteeinheit (20) mindestens eine Fahrvariante aus den Daten und Informationen ermittelt (26), **dadurch gekennzeichnet, dass** bei oder nach Einleiten (L) eines durch entsprechenden Lenkeinschlag eingeleiteten Ausweichfahrmanövers durch den Fahrer des Fortbewegungsmittels ein das durch den Fahrer eingeleitetes Fahrmanöver unterstützendes Fahrmanöver in Form einer ermittelten Fahrvariante vorgegeben wird, wobei die Vorgabe vom Fahrer jederzeit übersteuert werden kann.

2. Sicherheitssystem gemäß Anspruch 1, **dadurch gekennzeichnet, dass** das Lenksystem dem Führer des Fortbewegungsmittels die optimale Ausweichtrajektorie
- in Form eines aufgebrachten oder beaufschlagten Lenkmoments und/oder
- in Form mindestens eines haptischen Signals, insbesondere mindestens einer Schwingung oder mindestens einer Vibration,
vermittelt (40), und/oder
- in Form eines aufgebrachten Zusatzlenkwinkels, beispielsweise durch eine Überlagerungslenkung, aufbringt.

3. Sicherheitssystem gemäß Anspruch 1 oder 2, **dadurch gekennzeichnet, dass** die Auswertungseinheit (20) bei Gefahr, insbesondere bei hoher Kollisionsgefahr,
- mindestens ein akustisches, haptisches und/oder optisches Warnsignal sendet und/oder
- eine A[utomatische]N[ot]B[remsung] auslöst (50), sofern keine anderweitige Fahrvariante, insbesondere keine Ausweichtrajektorie, zur Verfügung steht.

4. Sicherheitssystem (100; 100") gemäß mindestens einem der Ansprüche 1 bis 3 oder Sicherheitssystem (100') gemäß dem Oberbegriff des Anspruchs 1, **dadurch gekennzeichnet, dass** das Sicherheitssystem (100; 100'; 100"), insbesondere die Auswertungseinheit (20; 20'), bei Gefahr, insbesondere bei hoher Kollisionsgefahr,
- das Lenksystem, das Bremssystem und/oder
- das Fahrwerk des Fortbewegungsmittels
parametrisiert, vorbereitet und/oder aktiviert (60), so dass das Fahrverhalten des Fortbewegungsmittels für ein durch den Führer des Fortbewegungsmittels durchzuführendes Fahrmanöver, insbesondere Ausweichmanöver oder Notbremsmanöver, optimiert ist.

5. Verfahren zur Erhöhung der Sicherheit im Straßenverkehr, wobei interne und externe Bedingungen eines Fortbewegungsmittels erfasst werden, die erfassten Bedingungen in Form von Daten und Informationen zusammengeführt werden und die erfassten Bedingungen bzw. die Daten und Informationen hinsichtlich des jeweiligen Gefährdungspotentials bewertet werden, wobei mindestens eine Fahrvariante aus den Daten und Informationen ermittelt wird, **dadurch gekennzeichnet, dass** während oder nachdem ein durch entsprechenden Lenkeinschlag eingeleitetes Ausweichfahrmanöver durch den Fahrer des Fortbewegungsmittels eingeleitet wird bzw. wurde, diese mindestens eine Fahrvariante, die das durch den Fahrer eingeleitete Fahrmanöver unterstützt, vorgegeben wird, wobei diese Vorgabe vom Fahrer jederzeit übersteuert werden kann.

6. Verfahren gemäß Anspruch 5, **dadurch gekennzeichnet, dass** dem Führer des Fortbewegungsmittels die optimale Ausweichtrajektorie
- in Form eines aufgebrachten oder beaufschlagten Lenkmoments und/oder
- in Form mindestens eines haptischen Signals, insbesondere mindestens einer Schwingung oder mindestens einer Vibration,
vermittelt (40) wird, und/oder
- in Form eines aufgebrachten Zusatzlenkwinkels, beispielsweise durch eine Überlagerungslenkung, aufgebracht wird.

7. Verfahren gemäß Anspruch 5 oder 6, **dadurch gekennzeichnet, dass** bei Gefahr, insbesondere bei hoher Kollisionsgefahr,
- mindestens ein akustisches, haptisches und/oder optisches Warnsignal emittiert wird und/oder
- eine A[utomatische]N[ot]B[remsung] ausgelöst (50) wird, sofern keine anderweitige Fahrvariante, insbesondere keine Ausweichtrajektorie, zur Verfügung gestellt wird.

8. Verfahren gemäß mindestens einem der Ansprüche 5 bis 7, **dadurch gekennzeichnet, dass** insbesondere bei Gefahr, zum Beispiel bei Auftreten eines Hindernisses auf der regulären Fahrbahn,
- sowohl für ein Fahrmanöver, insbesondere für eine Ausweichvariante, nach links
- als auch für ein Fahrmanöver, insbesondere für eine Ausweichvariante, nach rechts
mindestens eine für die aktuelle Situation optimale Ausweichtrajektorie berechnet (26) und/oder vorgehalten wird.

9. Verfahren gemäß mindestens einem der Ansprüche 5 bis 8 oder gemäß dem Oberbegriff des Anspruchs 5, **dadurch gekennzeichnet, dass** bei Gefahr, insbesondere bei hoher Kollisionsgefahr,
- das Lenksystem des Fortbewegungsmittels, das Bremssystem des Fortbewegungsmittels und/oder
- das Fahrwerk des Fortbewegungsmittels
parametrisiert, vorbereitet und/oder aktiviert (60) wird, so dass das Fahrverhalten des Fortbewegungsmittels für ein durch den Führer des Fortbewegungsmittels durchzuführendes Fahrmanöver, insbesondere Ausweichmanöver oder Notbremsmanöver, optimiert wird.

10. Verwendung mindestens eines Sicherheitssystems (100; 100'; 100") gemäß mindestens einem der Ansprüche 1 bis 4 und/oder eines Verfahrens gemäß mindestens einem der Ansprüche 5 bis 9 in mindestens einem Fahrerassistenzsystem zum Erhöhen der Sicherheit, insbesondere zum Vermeiden von Unfällen, im Straßenverkehr.

## Claims

1. Safety system (100, 100', 102') for a means of locomotion having at least one steering system and at least one brake system, having at least one detection unit (10) for detecting the internal and external conditions, having an evaluation unit (20, 20') for combining (22) the conditions detected by the detection unit (10), in the form of data and information, and for evaluating (24) the detected conditions or data and information with respect to the particular hazard potential, wherein the evaluation unit (20) determines (26) at least one driving variant from the data and information, **characterized in that,** during or after the initiation (L) of an avoidance manoeuvre initiated by corresponding steering lock applied by the driver of the means of locomotion, a driving manoeuvre which assists the driving manoeuvre initiated by the driver is predefined in the form of a determined driving variant, wherein the predefinition can be overridden by the driver at any time.

2. Safety system according to Claim 1, **characterized in that** the steering system imparts (40) to the driver of the means of locomotion the optimum avoidance trajectory
- in the form of an applied steering torque and/or
- in the form of at least one haptic signal, in particular at least one oscillation or at least one vibration, and/or
- said steering system applies the optimum avoidance trajectory in the form of an applied additional steering angle, for example by means of a superimposition steering system.

3. Safety system according to Claim 1 or 2, **characterized in that,** when there is a risk, in particular a high risk of a collision, the evaluation unit (20)
- transmits an acoustic, haptic and/or visual warning signal
and/or
- triggers (50) an automatic braking operation [ANB] if no other driving variant, in particular no avoidance trajectory, is available.

4. Safety system (100; 100") according to at least one of Claims 1 to 3 or safety system (100') according to the preamble of Claim 1, **characterized in that,** when there is a risk, in particular a high risk of a collision, the safety system (100; 100'; 100"), in particular the evaluation unit (20; 20') parametrizes, prepares and/or activates (60)
- the steering system, the brake system and/or
- the chassis of the means of locomotion with the result that the driving behaviour of the means of locomotion is optimized for a driving manoeuvre, in particular avoidance manoeuvre or emergency braking manoeuvre, which is to be carried out by the driver of the means of locomotion.

5. Method for increasing safety in road traffic, wherein internal and external conditions of a means of locomotion are detected, the detected conditions are combined in the form of data and information, and the detected conditions or the data and information are evaluated with respect to the particular hazard potential, wherein at least one driving variant is determined from the data and information, **characterized in that,** during or after the initiation of an avoidance manoeuvre, initiated by a corresponding steering lock, applied by the driver of the means of locomotion, this at least one driving variant, which assists the driving manoeuvre initiated by the driver, is predefined, wherein this predefinition can be overridden by the driver at any time.

6. Method according to Claim 5, **characterized in that** the optimum avoidance trajectory is imparted (40) to the driver of the means of locomotion
- in the form of an applied steering torque and/or
- in the form of at least one haptic signal, in particular at least one oscillation or at least one vibration, and/or
- is applied in the form of an applied additional steering angle, for example by means of a superimposition steering system.

7. Method according to Claim 5 or 6, **characterized in that,** when there is a risk, in particular a high risk of collision,
- at least one acoustic, haptic and/or visual warning signal is emitted and/or
- an automatic emergency braking operation [ANB] is triggered (50) if no other driving variant, in particular no avoidance trajectory, is made available.

8. Method according to at least one of Claims 5 to 7, **characterized in that,** when there is a risk, for example when an obstacle occurs on the usual carriageway, at least one optimum avoidance trajectory is calculated (26) and/or kept ready for the current situation
- both for a driving manoeuvre, in particular for an avoidance variant, to the left
- and for a driving manoeuvre, in particular for an avoidance variant, to the right.

9. Method according to at least one of Claims 5 to 8 or according to the preamble of Claim 5, **characterized in that,** when there is a risk, in particular when there is a risk of a collision,
- the steering system of the means of locomotion, the brake system of the means of locomotion and/or
- the chassis of the means of locomotion is parametrized, prepared and/or activated (60), with the result that the driving behaviour of the means of locomotion is optimized for a driving manoeuvre which is to be carried out by the driver of the means of locomotion, in particular an avoidance manoeuvre or emergency braking manoeuvre.

10. Use of at least one safety system (100; 100'; 100") according to at least one of Claims 1 to 4 and/or of a method according to at least one of Claims 5 to 9 in at least one driver assistance system for increasing safety, in particular for avoiding accidents, in road traffic.

## Revendications

1. Système de sécurité (100, 100', 102') pour un moyen de déplacement qui présente au moins un système de direction ainsi qu'au moins un système de freinage, lequel système présente :
au moins une unité de saisie (10) qui saisit des conditions internes et externes,
une unité d'évaluation (20, 20') qui rassemble (22) sous forme de données et d'informations les conditions saisies par l'unité de saisie (10) et qui évalue (24) les conditions saisies ou les données et les informations en termes de leur potentiel de risque, l'unité d'évaluation (20) déterminant (26) au moins une variante de déplacement à partir des données et des informations,
**caractérisé en ce que**
pendant ou après que le conducteur du moyen de déplacement introduit ou a introduit (L) une manoeuvre d'évitement sous la forme d'une action sur la direction, une manoeuvre de conduite qui soutient la manoeuvre de conduite introduite par le conducteur et qui présente la forme d'une variante de conduite saisie est prédéterminée, cette prédétermination pouvant toujours être surmontée par le conducteur.

2. Système de sécurité selon la revendication 1, **caractérisé en ce que** le système de direction transmet (40) au conducteur du moyen de déplacement la trajectoire optimale d'évitement
- sous la forme de l'application ou de la sollicitation d'un couple de direction et/ou
- sous la forme d'au moins un signal tactile, en particulier d'au moins une oscillation ou d'au moins une vibration,
et/ou **en ce qu'**il l'applique sous la forme de l'application d'un angle supplémentaire de changement de direction, par exemple par superposition d'une action sur la direction.

3. Système de sécurité selon les revendications 1 ou 2, **caractérisé en ce qu'**en cas de risque et en particulier en cas de risque élevé de collision, l'unité d'évaluation (20)
- émet au moins un signal acoustique, tactile et/ou optique d'avertissement et/ou
- déclenche un freinage automatique d'urgence (ANB) (50)
si aucune autre variante de conduite et en particulier aucune trajectoire d'échappement n'est disponible.

4. Système de sécurité (100; 100'') selon au moins l'une des revendications 1 à 3 ou système de sécurité (100') selon le préambule de la revendication 1, **caractérisés en ce qu'**en cas de risque et en particulier en cas de risque élevé de collision, le système de sécurité (100; 100'; 100'') et en particulier l'unité d'évaluation (20; 20') paramétrisent, préparent et/ou activent (60)
- le système de direction, le système de freinage et/ou
- le train de roulement du moyen de déplacement de telle sorte que le comportement de roulage du moyen de déplacement soit optimisé en vue d'une manoeuvre de conduite à exécuter par le conducteur du moyen de déplacement, et en particulier une manoeuvre d'évitement ou une manoeuvre de freinage d'urgence.

5. Procédé d'augmentation de la sécurité dans le trafic routier, dans lequel
des conditions internes et externes d'un moyen de déplacement sont saisies,
les conditions saisies sont rassemblées sous la forme de données et d'informations et les conditions détectées ou les données et les informations sont évaluées en termes de leur potentiel de risque, au moins une variante étant déterminée à partir des données et des informations,
**caractérisé en ce que**
pendant ou après que le conducteur du moyen de déplacement introduit ou a introduit une manoeuvre d'évitement déterminée par une action correspondante sur la direction, cette ou ces variantes qui soutiennent la manoeuvre de conduite lancée par le conducteur sont prédéterminées, cette prédétermination pouvant être surmontée à tout moment par le conducteur.

6. Procédé selon la revendication 5, **caractérisé en ce que** la trajectoire optimale d'évitement est transmise (40) au conducteur du moyen de déplacement
- sous la forme de l'application ou de la sollicitation d'un couple de direction et/ou
- sous la forme d'au moins un signal tactile, en particulier d'au moins une oscillation ou d'au moins une vibration et/ou
est appliquée sous la forme de l'application d'un angle supplémentaire de changement de direction, par exemple par superposition d'une action sur la direction.

7. Procédé selon les revendications 5 ou 6, **caractérisé en ce qu'**en cas de risque et en particulier en cas de risque élevé de collision,
au moins un signal acoustique, tactile et/ou optique d'avertissement est émis et/ou
**en ce qu'**un freinage automatique d'urgence (ANB) (50) est déclenché si aucune autre variante de conduite, en particulier aucune trajectoire d'échappement, n'est disponible.

8. Procédé selon au moins l'une des revendications 5 à 7, **caractérisé en ce qu'**en particulier en cas de risque, par exemple d'apparition d'un obstacle sur la bande de circulation normale,
- à la fois pour une manoeuvre de conduite, en particulier pour une variante d'évitement vers la gauche et
- pour une manoeuvre de conduite, en particulier une variante d'évitement vers la droite,
au moins une trajectoire d'évitement optimale pour la situation en cours est calculée (26) et/ou réservée.

9. Procédé selon au moins l'une des revendications 5 à 8 ou selon le préambule de la revendication 5, **caractérisé en ce qu'**en cas de risque et en particulier en cas de risque élevé de collision,
- le système de direction du moyen de déplacement, le système de freinage du moyen de déplacement et/ou
- le train de roulement du moyen de déplacement sont paramétrisés, préparés et/ou activés (60) de telle sorte que le comportement de roulage du moyen de déplacement soit optimisé en vue d'une manoeuvre de conduite à exécuter par le conducteur du moyen de déplacement, en particulier une manoeuvre d'évitement ou une manoeuvre de freinage d'urgence.

10. Utilisation d'au moins un système de sécurité (100; 100'; 100'') selon au moins l'une des revendications 1 à 4 et/ou d'un procédé selon au moins l'une des revendications 5 à 9 dans au moins un système d'assistance au conducteur en vue d'augmenter la sécurité dans le trafic routier et en particulier en vue d'éviter des accidents.
